# EUROPEAN PATENT APPLICATION

(11) **EP 1 396 505 A1**
(43) Date of publication of application: **10.03.2004**
(21) Application number: 01948153.0
(22) Date of filing: 02.04.2001
(51) Int. Cl.: C08F 8/20

(54) **METHOD FOR CONTINUOUSLY PRODUCING HALOGENATED ELASTOMERS AND DEVICE FOR CARRYING OUT SAID METHOD**

(71) Applicant: Otkrytoe Aktsionernoe Obschestvo " Nizhnekamsknefte Khim ", Tatarstan, 423570 (RU); Minsker, Karl Samoilovich, Ufa, 455076 (RU); Deberdeev, Rustam Yakubovich, Kazan, 420016 (RU)
(72) Inventor: MINSKER, Karl Samoilovich, Ufa, 455076 (RU); DEBERDEEV, Rustam Yakubovich, Kazan, 420016 (RU); BERLIN, Alexandr Alexandrovich, Moscow, 117419 (RU); IVANOVA, Svetlana Romanovna, Ufa, 450083 (RU); MINSKER, Sergei Karlovich, Ufa, 450083 (RU); DEBERDEEV, Timur Rustamovich, Kazan, 420016 (RU); BUSYGIN, Vladimir Mikhailovich, Nizhnekamsk, 423570 (RU); MUSTAFIN, Kharis Vagizovich, Nizhnekamsk, 423570 (RU); GILMUTDINOV, Nail Rakhmatullovich, Nizhnekamsk, 423570 (RU); RYAZANOV, Jury Ivanovich, Nizhnekamsk, 423570 (RU); GALYAVIEW, Shamil Shaikhievich, Nizhnekamsk, 423570 (RU); SHIYAPOV, Ravil Tagirovich, Nizhnekamsk, 423570 (RU); ZIYATDINOV, Azat Shaimullovich, Nizhnekamsk, 423570 (RU); UKHOV, Nikolai Ivanovich, Nizhnekamsk, 423570 (RU); ISHTERYAKOV, Alexandr Danilovich, Nizhnekamsk, 423570 (RU); SHAMSUTDINOV, Valery Garafovich, Nizhnekamsk, 423570 (RU); SOFRONOVA, Olga Vladimirovna, Nizhnekamsk, 423570 (RU); SHEPELIN, Vladimir Alexandrovich, Nizhnekamsk, 423570 (RU); KALININ, Vladimir Nikolaevich, Nizhnekamsk, 423570 (RU); BESPALOV, Vladimir Pavlovich, Yaroslavl, 150048 (RU); SALNIKOV, Sergei Borisovich, Yaroslavl, 150048 (RU); ANDREEV, Vladimir Anatolievich, Moscow, 107392 (RU); SEREBRYAKOV, Boris Rostislavovich, Nizhnekamsk, 423570 (RU)
(74) Representative: Held, Stephan, Dr.rer.nat., Dipl.-Chem.
(86) International application number: PCT/RU2001/000133
(87) International publication number: WO 2002/079273

(57) **Abstract**

A process for continuous production of an halogenated elastomer, comprising the steps of: feeding an halogenating agent into a continuous flow of an elastomer solution, which agent and solution are mixed and interact, thereby producing the halogenated elastomer; neutralizing the halogenated elastomer with a neutralizing medium; and at least one washing of said halogenated elastomer by a washing medium; the steps of halogenation, washing and neutralization being carried out under the conditions of turbulence accompanied with the inversion phenomenon, and with subsequent withdrawal of the surplus halogenating agent and with settling of the washing and neutralizing media from the halogenated elastomer.

Said process is carried out in an apparatus for continuous production of an halogenated elastomer, comprising reactors of halogenation, washing and neutralization, each one of the reactors being provided with static and dynamic means for generation of turbulence accompanied with the inversion phenomenon; downstream of each one of the reactors provided is a vessel for withdrawal of the surplus halogenating agent and of the sludge of the washing and neutralizing media from the halogenated elastomer.

## Description

### Field of the Invention

The invention relates to a process for continuous production of halogenated elastomers, and to an apparatus for effecting said process; the invention can be suitably used in petrochemical industry.

### Prior Art

Known is a process for producing the halogenated butyl rubber, comprising the steps of: heterophase halogenation of butyl rubber by gaseous halogens in a solvent that is inert with respect to said halogens, with subsequent neutralization of the reacting mixture with aqueous solutions of hydroxides and carbonates of alkali metals; washing of the halogenated butyl rubber solution with water; separation of the butyl rubber from the solution; and drying the same. According to this process, the reacting mixture is subdivided into the gaseous and liquid flows immediately after the halogenation process has ended; and then the flows are neutralized separately (USSR Inventors' Certificate No. 1065428, cl. C08F 210/12, C08F 8/22, 07 01 1984).

Said process mostly relates to only one stage of separating the reaction mixture into the gaseous and liquid media in the course of a periodical process for producing the halogenated butyl rubber.

The most pertinent, in terms of the technical essence and achieved result, art is the continuous process for halogenation of elastomers, according to which process: an halogenating agent is added to a solution of an unsaturated elastomer in an organic solvent; the halogenating agent is mixed with a continuous flow of the elastomer solution, whereby the halogenating agent is solved and interacts with an elastomer in said continuous flow. At that, the elastomer solution continuous flow is maintained in its turbulent motion, without occurrence of the inversion phenomenon of the flow in the course of the reaction between the halogenating agent and elastomer (PCT/EP 93/03552, cl. C08F 8/22, 10 12 93).

Said process does not provide production of an elastomer of a desired quality due to an uneven distribution of an halogenating agent together with an inert gas in the elastomer solution. Such uneven distribution is due the difficulty of attaining the turbulent motion in a reactor column under the atmospheric pressure along the entire height of a column, even when any static and dynamic means are present.

As to the technical essence and achieved technical result, the most pertinent teaching is the apparatus for halogentation of elastomers, comprising reactors for halogenation, neutralization and washing (PCT/EP 93/03552, cl. C08F 8/22, 10 12 93).

However, in said known apparatus, under the conditions of an excessive quantity of a gaseous mixture and a relatively viscous elastomer solution, mixing of said components is not sufficiently fast and homogeneous, because a gas or gaseous mixture - during their passage through static means, implemented in the form of rarely-positioned obstacles, such as Rashig rings - tend to move via the least-resistance path. Considering a high mobility of a gas in a viscous liquid medium, a gas will create movement routes and thereby degrade the elastomer halogenation efficiency.

### Disclosure of the Invention

The invention is intended to develop a process and devise an apparatus which will ensure continuous halogenation of elastomers for obtaining an homogeneous high-quality product.

Said object is accomplished with the use of the process for continuous production of a halogenated elastomer, which process comprises the steps of: feeding an halogenating agent into a continuous flow of an elastomer solution, which agent and solution are mixed and interact, thereby producing the halogenated elastomer; neutralizing the halogenated elastomer with a neutralizing medium; and at least one washing of said halogenated elastomer by a washing medium; the steps of halogenation, washing and neutralization being carried out under the conditions of turbulence accompanied with the inversion phenomenon, and with subsequent withdrawal of the surplus halogenating agent and with sludge of the washing and neutralizing media from the halogenated elastomer. As the elastomer used are the butyl, isoprene, divinyl, butadiene, butadiene-styrene rubbers, ternary copolymer of ethylene and propylene.

A halogenating agent, washing and neutralizing media are fed by forward flow; the chlorine, bromine and iodine compounds that release chlorine, bromine, iodine and/or their mixes are used as the halogenating agent.

A halogenating agent is introduced into the elastomer solution in such quantity that its content in the halogenated elastomer will be at least 0.7%. Chlorine, before it is added into the elastomer solution, is diluted with an inert gas, e.g. nitrogen in ratio of 1 : 0.8 - 1 : 12; and bromine and iodine, or mixes thereof, before their are added into the elastomer solution, are preliminarily diluted in an organic solvent used for solving the elastomer.

Temperature of the elastomer solution continuous flow is preferably maintained at the level not lower than 8°C in the course of halogenation, washing and neutralization.

The claimed process is implemented in the apparatus for continuous production of the halogenated elastomer, comprising: reactors of halogenation, washing and neutralization; each one of the reactors being equipped with the static and dynamic means for generating turbulence accompanied with the inversion phenomenon; downstream of each one of reactors provided is a vessel for withdrawing the surplus halogenating agent and sludge of the washing and neutralizing media from the halogenated elastomer.

The turbulence-generating static means include at least tree sections, each one of the sections consisting of a confuser in the form of a narrowing blunted cone, a diffuser in the form of a broadening blunted cone, and a cylindrical portion, which all are in-series and co-axially interconnected; the static means being positioned within the reactor housing.

Said sections may be rigidly inter-coupled to constitute the reactor housing.

The inclination angle of the confuser and diffuser's blunted cones preferably is at least 10° and at most 80°, height of each one of the sections is preferably 1.5 - 4 diameters of the cylindrical portion; and diameter of the connecting portion of the confuser and diffuser is preferably 1.25 - 2.7 times smaller than the cylindrical portion diameter.

The static means can be made of a porous body whose porosity being 0.10 - 0.85; which means are implemented in the form of at least one layer of spherical, ellipsoidal, cylindrical bodies, mesh, woven or non-woven materials or a combination thereof.

The dynamic means can be implemented in the form of a damper disposed inside the reactor body and covering at most 0.85 of its cross-section, the damper being rotatable with respect to the reactor housing.

The dynamic means can be made in the form of vanes disposed asymmetrically in respect of one another, being capable of rotation inside the reactor body.

The dynamic means can be implemented in a branch-pipe used for inlet or outlet of the halogenating agent, washing and neutralizing media.

Mixing of the interacting components is intensified by way of providing a turbulent flow.

A turbulent flow is characterized by Reynolds number from 2500 and more, and causes vortexes of different scales (macro- and micro-scale turbulence - macro- and micro-vortexes) to be formed, whereby homogeneous liquids are mixed rapidly and completely; or, in case of heterogeneous liquids, or a liquid and gas - a fine emulsion is formed. The higher is turbulence, the stronger is the mixing intensity and larger is the interface area in the emulsion. Further, the time required for mixing the interacting media is sharply reduced.

The flow turbulence emerges when a local resistance to a flow motion is overcome as certain speed values are achieved. The emerging macro- and micro-vortexes, when there is no resistance, transform into micro-vortexes, and then transform into a laminar flow. This phenomenon is brought about by dissipation of the turbulent energy due to the friction losses and formation of vortexes in the flow.

In case of the presence of continuous local resistances, the turbulent motion proceeds without inversion, i.e. the motion is continuous and has identical indices of the turbulence level.

The turbulent motion accompanied with the inversion phenomenon is provided by two ways. The first: by arranging a discontinuous local resistance on the flow path, whereby the emerging macro- and micro-vortexes, due to the friction and vortex-formation losses, transform into micro-vortexes and subside, then emerge again after next local resistance has been overcome, etc. The second: by imposing pulsation on the turbulent flow. In the latter case, the turbulence will be generated by virtue of a change in a speed or in a flow rate, thus providing the turbulent motion accompanied with the inversion phenomenon.

The turbulent motion accompanied with the inversion phenomenon can be obtained when motion proceeds via static turbulence-generating means, for example via confuser-diffuser sections or through porous bodies. When the confuser-diffuser sections are arranged in series, the macro- and micro-vortexes, that emerge when a flow moves at a sufficient speed, bring about the turbulence that gradually subsides and emerges again when encountering next turbulence-generating means.

The use of the dynamic turbulence means, for example in the form of dampers or vanes disposed asymmetrically on a shaft and being rotatable, provides the conditions conducive to imposition of the speed or flow-rate pulsation upon the turbulent motion. This is done for the purpose to increase a rate of occurrence the inversion phenomena, and improves intensity of mixing and interaction of the mixed components, the elastomer solution viscosity being taken into account.

The compounds having the double bond in the main chain of monomer residue can be used as elastomers. Thus the range of the used elastomers is sufficiently broad, including: the isoprene, butyl, divinyl, butadiene, butadiene-styrene elastomers, ternary copolymer of ethylene and propylene. Other elastomers for the reason of their different molecular mass, inter-molecular interaction and other indices can have high values of viscosity and other properties, which circumstance reduces the elastomer solid residue in a solution and causes other technological problems to emerge.

Halogenating agents, gaseous and liquid or their mixes, are added to an elastomer solution in a quantity sufficient for attaching to the double bond of an elastomer, which bond will provide the content of a halogen therein being at least 0.7%. The time required for halogenation under said conditions is tens seconds.

A certain difference of the halogenation process course is observed in a gas-liquid mixture and in a solution.

Halogenation of an elastomer solution by gaseous chlorine has a peculiarity of the use of a large volume of inert gaseous medium, for example nitrogen, in ratio of 1:0.8 - 1:12.

As the gaseous medium volume involved in the process may significantly exceed that of the elastomer solution, porous bodies in the halogenation reactor must have a required porosity so that to exclude short-circuiting or skipping of the gaseous medium through the reactor.

Interaction of a halogen and elastomer solution in many aspects depends on the state of the halogen phase. In case of the gaseous phase state, a fine gas-liquid emulsion has to be quickly created and maintained, which emulsion should be vigorously stirred along the entire height of the halogenation reactor. At that, vigorous stirring of a fine emulsion will maintain an improved interface surface of the emulsion and provide the intensive chemical reaction of addition of chlorine.

In case of use of a halogen, its mixture or its compound in the form of a solution, a more intense chemical reaction of addition of an halogen to an elastomer is caused by intensity of mixing in the turbulent flow. In view of a sufficient viscosity of an elastomer solution, a stable turbulence of a flow along the reactor height is provided by imposition of the flow-rate or speed pulsation upon the flow, i.e. by the turbulent motion accompanied with the inversion phenomenon is provided.

Subsequent steps of the main and additional washings, neutralization and stabilization of the halogenated elastomer are also carried out when the flow moves turbulently accompanied with the inversion phenomenon.

The halogenated elastomer is subjected to the main washing by introducing forward flow of a washing medium (water) into the halogenated elastomer flow. Such washing is done for the purpose to dissolve salts and other admixtures in the washing medium.

In view of different nature of liquids and their incompatibility, the turbulent flow is required to provide an intense and rapid dissolution of salts and other admixtures in the halogenated elastomer solution. For the reason that the halogenated elastomer solution is quite viscous, the pulsations created by the turbulence-generating dynamic means are imposed upon the turbulent flow generated by the static turbulence means.

The dynamic turbulence-generating means are implemented as vanes that are disposed on a shaft asymmetrically, said shaft being capable to rotate. Thus, the conditions of the turbulent motion of the mixed flow accompanied with the inversion phenomenon are brought about. This results in that the flow continuity is broken and a fine emulsion is rapidly formed, and on its interface surface the mass transfer takes place. The mass transfer intensity is determined mostly by the interface surface area and by renewal of said surface in the course of the progress along the reactor height.

The turbulence-generating static means are implemented in the form of a confuser-diffuser section. A confuser is a narrowing blunted cone, a diffuser is a broadening blunted cone, which cones are interconnected at the least diameter. A cylindrical portion is attached to the diffuser at the biggest diameter. These connected members constitute the confuser-diffuser section. The section has the length of 1,5 - 4.0 diameters of the cylindrical portion.

The section length is selected such that the macro- and micro-vortexes resulted from compression and expansion will undergo the inversion caused by dissipation of the turbulence energy, i.e. said vortices weaken and subside, but not completely, and preserve their turbulence until they are affected by next confuser-diffuser section.

Diameter of the confuser and diffuser in the connection place is 1.25 - 2.7 times smaller than the cylindrical portion diameter. Such selection of dimensions is caused by the circumstance that a slight difference of diameters provides insignificant resistance drops and a weak turbulence of the flow, and a great difference of diameters, though providing a strong turbulence of the flow, creates a significant resistance to the motion, hence - technological difficulties.

The inclination angle of the narrowing confuser and broadening diffuser with respect to the section axis in a reactor is 10 - 80°. The inclination angle also depends on the flow turbulence conditions. A small angle, less than 10°, does not ensure the flow turbulence; and a greater angle, over 80°, causes stagnant zones to be formed, which zones affect the flow turbulence.

Number of sections in the reactor housing must be at least three sections. This number is selected taking into account the nature of the media to be mixed and conditions of their interaction. For some stages, for example for the stabilizer-adding step, three sections will suffice; and for other steps, for example for halogenation, more sections are required, besides the sections should be distributed along the entire reactor height.

The confuser-diffuser sections can be installed in the reactor housing in the in-series arrangement, the sections' axes coinciding with that of the reactor body. The confuser-diffuser sections can be interconnected rigidly to constitute the reactor housing.

The flow turbulence can be achieved by means of a porous body disposed within the reactor housing and having porosity of 0.10 - 0.85. The reason is that a porous body may be considered as a plurality of local resistances to the flow motion, where on a local resistance the macro- and micro-vortexes are formed, which vortexes subside in movement towards next resistance, become inverted and are generated again, etc. A porous body can be disposed within the reactor housing in any of the following ways: continuous, periodical, local.

A porous body may be made of various materials, for example: spherical, ellipsoidal, cylindrical hollow and continuous bodies, as a mesh, grid, woven and non-woven materials, and a combination thereof. Porosity variations (ratio of the free and total cross-section areas) can be within the range of 0.10 - 0.85, thus providing the flow motion turbulence accompanied with the inversion phenomenon.

Each one of the reactors is equipped not only with the static turbulence means, but with the dynamic ones as well. The use of the dynamic turbulence means is necessitated by the fact that the elastomer solution viscosity and that of the produced halogenated elastomer, and the requirement to maintain the continuous flow along the reactor height is the extremely difficult task in the industrial environment. This task can be fulfilled only by imposing the speed or flow-rate pulsation upon the flow. In such case, the way to accomplish the goal of attaining the turbulent motion is simplified.

For that purpose, a damper is provided inside the reactor housing, which damper, rotating on a shaft, covers at most 0.85 of the housing cross-section area. Thus the flow-rate pulsation is provided. Other dynamic turbulence-generating means can be also used, which means are the vanes disposed asymmetrically in relation to one another. When a shaft rotates, the vanes create the speed pulsation, which pulsation is imposed upon the turbulent flow, and ensures that the inversion phenomenon will emerge.

### Brief Description of Drawings

The invention will be readily apparent when examined in conjunction with the accompanying drawing, wherein
Fig. 1 shows an apparatus for continuous production of an halogenated elastomer;
Fig. 2 shows static means for generating turbulence;
Fig. 3 shows a reactor housing made of the rigidly coupled co-axial parts;
Fig. 4 shows a portion of the reactor equipped with static means;
Fig. 5 shows a portion of the reactor equipped with dynamic means.

### Preferable Embodiment of the Invention

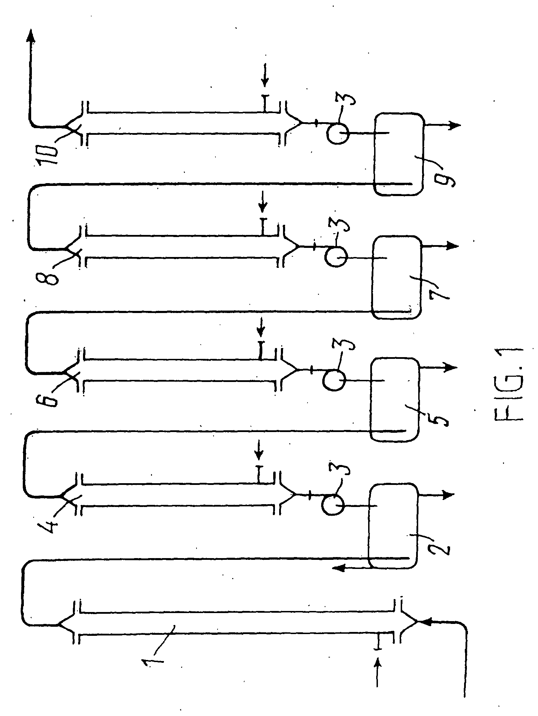

Fig. 1 shows an apparatus for continuous production of an halogenated elastomer. The apparatus comprises halogenation reactor 1, vessel 2 for withdrawing the surplus halogenating agent from the halogenated elastomer, pump 3 to supply the halogenated elastomer solution, main washing reactor 4, vessel 5 for withdrawing the sludge of the washing medium, neutralization reactor 6, vessel 7 for withdrawing the sludge of neutralizing medium, reactor 8 for additional washing, vessel 9 for withdrawing water, and stabilization reactor 10.

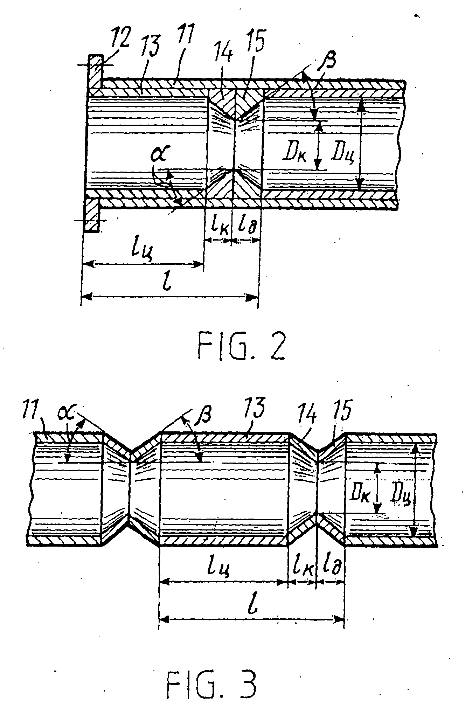

Each one of the reactors is provided with both the static and dynamic turbulence-generating means. The static turbulence-generating means of the confuser-diffuser type are shown in Fig. 2. Housing 11 of the reactor has flange 12. Housing 11 accommodates cylindrical portion 13, confuser 14 and diffuser 15. Structural members 13-15 together constitute a confuser-diffuser section. Number of the sections inside reactor housing 11 must be at least three sections.

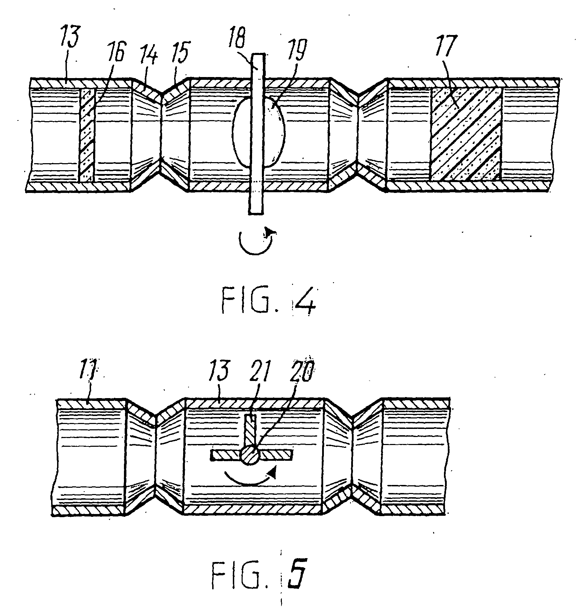

Fig. 3 shows reactor housing 11 that consists of the co-axial and rigidly coupled: cylindrical portion 13, confuser 14 and diffuser 15, and is a pipe of a variable diameter. Inclination angle of the confuser blunted cone is more than 10° but less than 80°, that of the diffuser blunted cone is more than 10° but less than 80°.

Length of the confuser-diffuser section is L; length of the cylindrical portion of the section is lᵤ, length of a confuser and diffuser are lₖ and 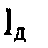 , respectively. Dᵤ is diameter of the internal surface of the section's cylindrical portion; and D_{κ} is diameter at the place where the confuser and diffuser are interconnected.

Fig. 4 shows a portion of the reactor housing equipped with both types of the turbulence-generating means: a confuser-diffuser section (cylindrical portion 13, confuser 14 and diffuser 15) and porous bodies 16 and 17. Porous bodies 16 and 17 differ by their porosity. The porosity is the proportion in a body, in terms of its volume, occupied by pores, which is expressed as ratio of volume of pores and total volume of a body.

In the cylindrical portion of one of the confuser-diffuser sections, damper 19 is mounted on shaft 18 and represents the dynamic turbulence-generating means. The damper is rotatable such that it periodically partly covers the reactor housing cross-section area.

Fig. 5 shows a portion of reactor housing 11, wherein in cylindrical portion 13 of the confuser-diffuser section provided is shaft 20 whereon vanes 21 are installed. Vanes 21 are capable of rotating on the shaft.

The interacting components are fed and intermixed either in the reactor itself, or upstream of the reactor in the feed pipes. The components' mixture is taken by a withdrawal pipe that extends essentially along the reactor housing axis.

Vessels 5, 7 and 9 for withdrawal of the washing and neutralizing media sludge are the vessels, capacity of each of which exceeds the apparatus' production capacity per hour. Materials of reactors, vessels, pumps and connecting pipes are selected with consideration for their corrosion-resistance ability in respect of the media wherein they will be used. Three reactors 1, 4 and 6, or a portion of their housings, and vessel 5 for withdrawing the surplus neutralizing medium can be provided with heat-exchange jackets.

The claimed apparatus operates as follows. An elastomer in an hydrocarbon solvent and an halogenating agent, in the gaseous or liquid state, are fed into halogenation reactor 1 under a positive pressure. Motion of the gas-liquid mixture or mixed liquids inside reactor 1 housing, under continuous and simultaneous action of the static and dynamic turbulence-generating means, results in that the flow acquires turbulence accompanied with the inversion phenomenon. As a result of formation of macro- and micro-vortexes and owing to their periodical fall and rise (the turbulence accompanied with the inversion phenomenon) ensured is addition of an halogen, which halogen is uniformly distributed in the entire volume of the elastomer solution under the conditions of the continuous vigorous stirring. The addition process is effected mainly in the kinetic region during several tens seconds. Temperature of the reactor mixture must be at least 8°C.

The halogenated elastomer so produced, whose halogenation degree is the function of the fed halogenating agent quantity per unit of mass of an elastomer, is supplied into vessel 2 serving to withdraw the surplus halogenating agent in the liquid or gaseous state, depending on the used type of halogen.

The solution of the produced halogenated elastomer, by means of pump 3, is delivered to main washing reactor 4 whereto water is supplied simultaneously. In said reactor 4, under action of the static and dynamic turbulence-generating means, the fed solution of the halogenated elastomer and the washing water acquire the turbulent motion of the flow accompanied with the inversion phenomenon. The medium continuity is broken, and a fine aqueous-organic emulsion with the permanently renewing interface surface is formed. As a result, metal salts and other admixtures are removed from the halogenated elastomer solution to the water.

The emulsion is delivered to vessel 2 for settling and separating into the organic and aqueous media. The aqueous medium, having pH less than 6, is disposed of as the chemically polluted sewage. The washed solution of the halogenated elastomer, by pump 3, is delivered to neutralization reactor 6. The neutralizing 0.1-0.7% aqueous solution of alkalis, bases and other compounds is fed to reactor 6.

The flow of the halogenated elastomer and neutralizing medium acquires the turbulent motion accompanied with the inversion phenomenon in the reactor. This results in formation of a fine aqueous-organic emulsion having the permanently renewing interface surface. Owing to vigorous stirring of the interacting media, neutralization proceeds relatively fast. Ratio of the neutralization solution volume and the halogenated elastomer solution volume is about 1 : 1. Then the emulsion is delivered to vessel 7 served for withdrawing the washing medium, where the washing medium is separated into the constituent media and settled, the washing medium being disposed of as the chemically polluted sewage.

The neutralized solution of the halogenated elastomer from vessel 7, using pump 3, is delivered into reactor 8 for additional washing by water. The washing is carried out under the conditions of the flow turbulent motion accompanied with the inversion phenomenon, which washing causes formation of the fine aqueous-organic emulsion, and also a rapid and complete washing of the halogenated elastomer. The emulsion is fed to vessel 9 to remove water therefrom, where the emulsion is broken, settled and separated into the aqueous and organic media. Water from vessel 9, after preliminary treatment, may be delivered to reactor 4 to be used for the main washing, or disposed of as sewage.

The finally washed halogenated elastomer solution from vessel 9, by pump 3, is delivered to vessel 10, whereto a stabilizer solution is introduced. The stabilizer solvent is identical to the elastomer solvent. The interacting flows under the conditions of the turbulent motion accompanied with the inversion phenomenon, are rapidly mixed in volume, thus providing a uniform distribution of the stabilizer in the halogenated elastomer solution. From reactor 10, the stabilized halogenated elastomer solution passes for further treatment: crumbing, degassing and briquetting.

The claimed process for continuous production of a halogenated elastomer is carried out in an apparatus therefor.

### Example 1

To a reactor - 50 mm in diameter, lined with a fluoroplastic 1.5 mm thick and being 3000 m high - from below fed is 13% solution of butyl rubber BK 2080 having Mooney viscosity (at 125°C) of 54-58, unsaturatedness (number of double bonds) of 1.9 - 2.2 mol %, in nefras (solvent) TU 38.1011228-90, under pressure of 0.16 MPa. Solution of 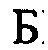 K in quantity of 400 l/h (solid residue - 34.3 kg/h) at temperature 30°C is delivered using gear pump SH-8-25 (State Standard 12222-66). Gaseous chlorine (State Standard 6718-86), mixed with dehydrated nitrogen (State Standard 9293-74) in ratio of 1:5.5, via the lateral connection in the lower portion of said tubular reactor, is fed through a grid. The chlorine-nitrogen mixture (CNM) is fed using a controller, outlet pressure being 0.23 MPA, flow rate being 1680 l/h of CNM (chlorine - 280 l/h, nitrogen - 1400 l/h), which is the molar ratio of chlorine and the double ratio of 1.2.

The reactor housing, under the grid, is provided with an entangled metal chips of Hosteloy metal, that is corrosion-resistant in this medium, 300 m high and having porosity of 0.5. The chips are covered by a mesh, gauge of the coated wire is 0.4 mm, pitch of the square mesh being 3 mm. Over the mesh, along the reactor height, the reactor is provided with confuser-diffuser sections having the following dimensions: the cylindrical portion has the inner diameter of 41 mm and height of 120 mm; minimal diameter of the confuser-diffuser is 22 mm, and the inclination angle of generatrices of the blunted cones is 45°. Number of sections is 15. The cylindrical portion of the sixth section has 2 through openings, disposed along the diameter and coinciding with the openings arranged in the reactor housing and in protective lining, through which openings a damper and shaft are secured inside the housing. The damper with the shaft, and bearing with seals have a corrosion-resistant coating. The seals ensure tightness of the reactor housing. The damper is provided with an electromechanical drive. Rotary velocity of the damper is 10 rpm. The damper ensures the maximum covering of the reactor cross-section area of the inner diameter of the confuser-diffuser section cylindrical shell in the amount of 0.8 of that area.

Analysis of the gaseous-liquid mixture sampled from the sampler at the tubular reactor outlet demonstrates that the outputted mixture has the milky-white color indicating that a fine emulsion is formed.

The emulsion exiting from the tubular reactor, enters the vessel for withdrawal of the surplus halogenating agent, having capacity of 6.3 m³, in which vessel the gaseous-liquid emulsion is broken, and the gaseous non-reacted chlorine and inert nitrogen are withdrawn via a chlorine neutralization system.

The chlorinated butyl rubber solution with pH of 2-3, from said withdrawal vessel, via (plunger) pump HD-100x16, is delivered into the reactor which is identical to the above-described reactor. Diameter of this reactor is 50 mm, its height is 1500 mm. The reactor interior is provided with a corrosion-resistant coating. The reactor accommodates a porous body 120 mm high, made of metal chips and a corrosion-resistant mesh; porosity of the body being 0.15. The reactor further has 10 confuser-diffuser sections. At input of the reactor housing, between the housing inlet pipe and the pipe that withdraws the halogenated elastomer and washing water, a damper capable of being sealed and of rotating on the shaft is mounted. Rotary velocity of the damper is 10 rpm. Accordingly, when the halogenated butyl rubber and washing water move, in the reactor the turbulent motion, accompanied with the inversion phenomenon, of the flow is generated, and the aqueous-organic emulsion is formed. The emulsion, after the reactor, enters the washing medium withdrawal vessel having capacity of 6.3 m³, where said emulsion is broken and settled. The washing medium, containing the metal salts and admixtures, pH=4, is disposed of as the chemically polluted sewage.

The halogenated elastomer solution, using pump HD-1000x16, is again fed into the reactor, similar to the above-described one, to which reactor the neutralizing 0.4% aqueous solution of alkali NaOH is fed. Ratio of the supplied neutralizing solution and volume of the halogenated butyl rubber is 1;1, temperature being 30-35 °C.

The so produced mixture in the form of the aqueous-organic emulsion is delivered from the reactor to the neutralizing medium sludge withdrawal vessel, having capacity of 6.3 m³, where the emulsion is broken and separated. The separated water with pH = 10-11 is removed to be disposed of as the chemically polluted sewage, and the neutralized halogenated butyl rubber solution, with pH=7-8, using pump SH-8-25, is delivered to the tubular reactor made of stainless steel. The distinguishing feature of said reactor is that members of the confuser-diffuser sections are co-axially and rigidly interconnected, being the integral parts of the housing. Inner diameter of the cylindrical portion is 50 mm, height is 130 mm. The least diameter of a confuser-diffuser section is 22 mm, angle of inclination of generatrices of the confuser and diffuser is 55°. Number of the confuser-diffuser sections is 8. Between the housing inlet pipe and the pipe used for withdrawal of the halogenated elastomer solution and washing medium for additional washing, vanes are positioned on the shaft and arranged asymmetrically with respect to one another. A system of plain bearings and sealing provides tightness of this assembly. Rotary velocity of the shaft with the vanes positioned thereon is 80 rpm. Number of vanes is 3, the vanes being disposed along the shaft diameter at angle of 90° with respect to one another. The fourth vane is absent. The aqueous-organic mixture formed as a result of the additional washing enters the vessel for withdrawal of the washing medium, having capacity of 6.3 m³, wherein the emulsion is broken, and the washing medium and the halogenated elastomer solution are separated. The washing medium is collected, and after having been treated, is delivered to be used in the main washing; and the halogenated elastomer solution, using pump SH-8-25, is delivered to a stainless-steel reactor, which is similar to the one used at the preceding step of the additional washing, and which is provided with asymmetrical vanes, and into which reactor, via a special pipe, introduced is 10% solution of Irgonox stabilizer (Ciba company) in nefras (TU 38.1011228-90) at rate of 1 l/h by means of proportioning pump HD 2.5 10/100 (OST 26-06-2003-77). Thus, when the necessary conditions for movement of the mixed flows are provided, the stabilizer within the halogenated butyl rubber is distributed uniformly.

The stabilized halogenated butyl rubber solution is delivered for further treatment thereof. Characteristics of the produced butyl rubber are represented in Table 1, Experiment 1.

### Example 2

Conditions of this Example are the same as in Example 1. As the halogenating agent used is bromine (GOST 454-76) in solution of nefras (TU 38.1011228-90) in the amount of 4.8 weight % of bromine in an elastomer, i.e. for 400 l/h of butyl rubber solution 22 l/h of bromine solution are provided. Properties of the produced bromine butyl rubber are represented in Table 1, Experiment 2.

### Example 3

Conditions of this Example are the same as in Example 1. As the halogenating agent used is gaseous chlorine (State Standard 6718-86), dissolved beforehand in nefras (TU. 38.1011228-90), in the amount of 12 weight % of chlorine in an elastomer, i.e. for 400 l/h of the butyl rubber solution 10.6 l/h of the clorine solution are provided. Properties of the produced chlorobutyl rubber are represented in Table 1, Experiment 3.

### Example 4

Conditions of this Example are the same as in Example 1. Instead of butyl rubber used is 10% solution of the treble ethylene-propylene rubber, ratio of ethylene/propylene being 68/32, percentage of dicyclopentadiene being 5.8%, Mooney viscosity (125°C) being 48 according to TU 2294-022-05766801-94). The chlorine-nitrogen mixture in ratio of 1:4.5 is provided in the quantity of 3 weight % of chlorine in a polymer. Properties of the chlorinated rubber are represented in Table 1, Experiment 4.

### Example 5

Conditions of this Example are the same as in Example 1. As the halogenating agent used is sodium hydrochloride (State Standard 11086-76) in the form of 10% aqueous solution. Quantity of the aqueous solution is 10.3 l/h (1.03 kg/h of hypochloride). In a reactor-chlorator, under the conditions of turbulent motion accompanied with the flow inversion, formed is the aqueous-organic emulsion; chlorine being released in the monatomic form and interacts with the elastomer (butyl rubber), and thus chlorobutyl rubber is produced. Properties of chlorobutyl rubber are represented in Table 1, Experiment 5.

### Example 6

Conditions of this Example are the same as in Example 1. As the halogenating agent used are chlorine, bromine and nefras in ratio of 1:1, 8:3.5, respectively. Properties of the produced chlorobromobutyl rubber are represented in Table 1, Experiment 6.

### Example 7

The process equipment is based on the reactor having capacity of 1.5 m³, and provided with a mixer having rotary velocity of 122 rpm. The reactor is filled with 400 l of 13% solution of butyl rubber (parameters of the process, proportioning and materials are identical with those of Example 1), and supplied with the chlorine-nitrogen mixture in ratio of 1:2; chlorination is carried out with stirring during 6 hours. The reactor is then blown with nitrogen, and the main washing is executed with water. Which step lasts 30-40 min, then the mixer is stopped, the water is separated and withdrawn. Into the halogenated butyl rubber introduced is a neutralizing solution, and said butyl rubber is stirred again for 30-40 min. Then stirring is stopped, the neutralizing solution is separated and withdrawn from the reactor. In the course of stirring, water is delivered again for the additional washing. This washing lasts 30-40 min. Then the water is separated and withdrawn again. A stabilizer solution is added to the washed solution of the halogenated butyl rubber, and stirring is carried out for 20-30 min. The stabilized product is conveyed to its further treatment. The resulted indices of the produced chrolobutyl rubber are represented in Table 1, Experiment 7 (batch 1) and Experiment 8 (batch 2).

### Example 8

Conditions of this Example are the same as in Example 1. Butyl rubber is chlorinated in the reactor of 50 mm in diameter and 3000 mm high, the reactor is lined with fluoroplastic 1.5 mm thick. In the reactor, above the grid, positioned are Rashig rings, having outside diameter of 20 mm, inner diameter of 15 m, and height of 20 mm. Height of the filling layer is 100 mm, arranged in approximately 4-5 rows. The steps of the main washing, neutralization, additional washing and stabilization of the halogenated butyl rubber are executed as in Example 7.

Visual inspection of a sample of the mixture indicates the presence of gaseous inclusions within the produced chlorobutyl rubber (the absence of emulsion) (Experiment 9).

In the embodiment when Rashig rings occupy 2/3 of the reactor height (Experiment 10), a sample taken downstream of the reactor demonstrates only separate gaseous inclusions within the produced chlorobutyl rubber solution (the absence of emulsion). The resulted indices of the produced chrolobutyl rubber are represented in Table 1, Experiments 9 and 10.

Analysis of the technical properties of the produced halogenated elastomer shows that the process for continuous production of the halogenated elastomer under the conditions of turbulence accompanied with the inversion phenomenon, is more stable, which improved stability is indicated by percentage variance of the halogen in an elastomer, and also by its easier production in terms of the time required therefor, by stable content of an halogen in an elastomer, insignificant reductions of molecular mass, with a sufficient proportion of an halogen in an elastomer. All these improvements are achieved owing to provision of the turbulent motion mode of the interacting flows, accompanied with the inversion phenomenon.

Replacement of the halogen type (Experiments 1 and 2), its aggregative state (Experiments 2-4), their mixes (Experiment 6), the use of the halogen-releasing substances (hypochloride, Experiment 5) essentially do not affect the obtained results. The process is temporally stable, and any deviation from the standard indices of the halogenated rubber may occur only in the event of a considerable failure of supply of the interacting media.

Experiments 7 and 8, which were executed according to the conventional process, demonstrate the difficulty of a long duration of their technique for producing the halogenated elastomer; the risk that destructive processes would proceed in an elastomer under influence of non-uniform distribution of an halogen within its volume, insufficient halogenation of an elastomer, etc. Different Experiments 7 and 8 (batches 1 and 2) gave a considerable variance of properties of the halogenated elastomer.

According to Experiments 9 and 10, halogenation is carried out as in the most pertinent prior art under the conditions of the turbulent motion, without occurrence of the inversion phenomenon. The experiments have demonstrated that creation of turbulence using the static or dynamic turbulence-generating means in a column, in the form of, for example, one layer of Rashig rings, did not ensure the presence of the turbulent motion along the entire height of a column. In the embodiment where Rashig rings occupy 2/3 of the column height (Experiment 10), a strong resistance to the interacting media is brought about, and in this case it is difficult to provide the turbulent motion without the inversion phenomenon. In such case the turbulence rapidly disappears along the column height due to resistance to the motion, and the flow acquires the laminar motion. This is confirmed by appearance of the mixture of gas and chlorinated elastomer: the gas is in the form of separate bubbles in the chlorobutyl rubber solution, i.e. formation of the gas-liquid emulsion at outlet of the column is not observed, though chlorination takes place. It should be noted that in Experiment 10 the chlorination degree is lower than in Experiment 9. The presumable reason is that the flow in Experiment 10 is more laminar than in Experiment 9.

Thus, production of the halogenated elastomer by the continuous process under the conditions of turbulent motion, accompanied with the inversion phenomenon, provides novel possibilities to render all process steps more intense. Preconditions for providing the large-scale production using the energy- and resources-saving technology thus will come into being.

This can be achieved owing to the fact that all process steps become more intense, for example halogenation is completed within tens seconds, instead of several hours; and owing to the use of small-size compact and inexpensive equipment,_and owing to the fact that tubular reactors operate more vigorously.

For implementation of the claimed process, the required construction-erection works are of a small scale and do not need any considerable investment.

### Industrial Applicability

The invention can be suitably used in production of technical rubber articles, glues, paints, corrosion-resistant coatings used in aviation, mechanical engineering, medicine, articles of the household use, etc.

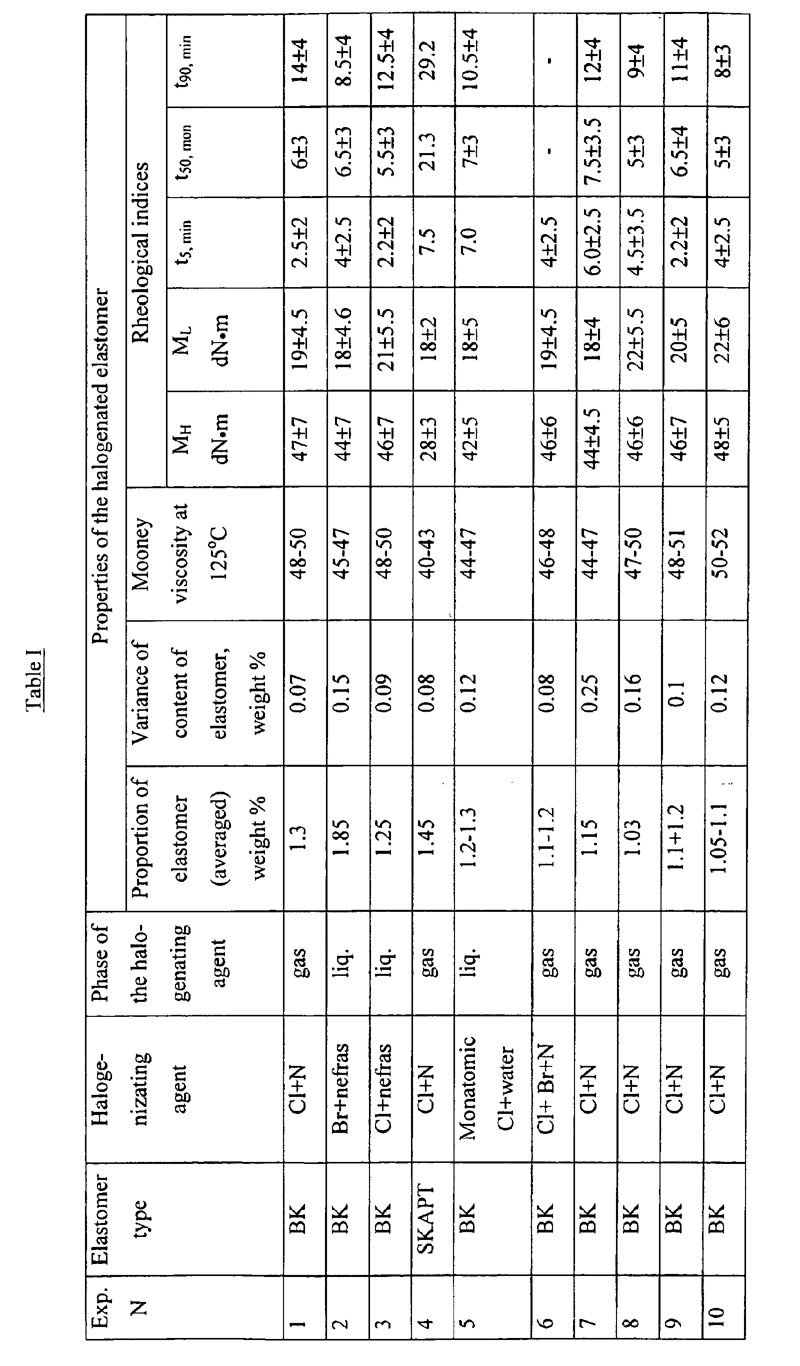

## Claims

1. A process for continuous production of an halogenated elastomer, comprising the steps of: feeding an halogenating agent into a continuous flow of an elastomer solution, which agent and solution are mixed and interact, thereby producing the halogenated elastomer; neutralizing the halogenated elastomer with a neutralizing medium; and at least one washing of said halogenated elastomer by a washing medium;
**characterized in that** the steps of halogenation, washing and neutralization are carried out under the conditions of turbulence accompanied with the inversion phenomenon, and with subsequent withdrawal of the surplus halogenating agent and with settling of the washing and neutralizing media from the halogenated elastomer.

2. The process as claimed in claim 1, **characterized in that**, the halogenating agent and the washing and neutralizing media are fed by a forward flow.

3. The process as claimed in claim 1, **characterized in that** as the elastomer used are the butyl, isoprene, divinyl, butadiene, butadiene-styrene rubber, ternary copolymer of ethylene and propylene.

4. The process as claimed in claim 1, **characterized in that** the chlorine, bromine and iodine compounds that release chlorine, bromine, iodine and/or their mixes are used as the halogenating agent.

5. The process as claimed in claim 1, **characterized in that** the halogenating agent is added to the elastomer solution in such quantity that content of said halogenating agent in the halogenated elastomer is at least 0.7%.

6. The process as claimed in claim 4, **characterized in that** chlorine before being fed into the elastomer solution is diluted by an inert gas, for example nitrogen, in ratio of 1:0.8 - 1:12.

7. The process as claimed in claim 1, **characterized in that** bromine and iodine or their mixes before being fed into the elastomer solution are preliminarily diluted in an organic solvent used for dissolution of the elastomer.

8. The process as claimed in claim 1, **characterized in that** temperature in the elastomer solution continuous flow in the course of halogenation, washing and neutralization steps is maintained at least at 8°C.

9. An apparatus for continuous production of an halogenated elastomer, comprising reactors of halogenation, washing and neutralization, **characterized in that** each one of the reactors is provided with static and dynamic means for generation of turbulence accompanied with the inversion phenomenon; downstream of each one of the reactors provided is a vessel for withdrawal of the sludge of the washing and neutralizing media and of the surplus halogenating agent from the halogenated elastomer.

10. The apparatus as claimed in claim 9, **characterized in that** the static means include at least three sections, each of which consists of a confuser in the form of a narrowing blunted cone, a diffuser in the form of a broadening blunted cone, and a cylindrical portion, which all are in-series and co-axially interconnected; the static means being accommodated within the reactor housing.

11. The apparatus as claimed in claim 10, **characterized in that** the sections are rigidly interconnected to constitute a reactor housing.

12. The apparatus as claimed in claims 10 or 11, **characterized in that** the angle of inclination of the blunted cones of the confuser and diffuser is 10° - 80°.

13. The apparatus as claimed in claims 10 or 11, **characterized in that** height of each one of the sections is 1.5 - 4 diameters of its cylindrical portion.

14. The apparatus as claimed in claims 10 or 11, **characterized in that** diameter of the connecting portion of the confuser and diffuser is 1.25 - 2.7 times less than that of the cylindrical portion.

15. The apparatus as claimed in claim 10, **characterized in that** the static means are made of a porous body having porosity of 0.10 - 0.85.

16. The apparatus as claimed in claim 15, **characterized in that** the porous body is implemented of at least one layer of spherical, ellipsoidal, cylindrical bodies, a mesh, woven or non-woven materials, or their combination.

17. The apparatus as claimed in claim 9, **characterized in that** the dynamic means are a damper disposed inside the reactor housing and covering at most 0.85 of its cross-section area; the damper being rotatable with respect to the reactor housing axis.

18. The apparatus as claimed in claim 9, **characterized in that** the dynamic means are vanes disposed asymmetrically in respect of one another, being capable of rotating inside the reactor housing.

19. The apparatus as claimed in claim 17, **characterized in that** the dynamic means are arranged in a branch-pipe used for inputting or outputting the halogenating agent, washing or neutralizing media.
